# EUROPEAN PATENT APPLICATION

(11) **EP 4 513 650 A1**
(43) Date of publication of application: **26.02.2025**
(21) Application number: 22955309.4
(22) Date of filing: 17.08.2022
(51) Int. Cl.: H01M 50/358, H01M 10/613, H01M 50/204

(54) **BOX BODY ASSEMBLY, BATTERY, AND ELECTRIC APPARATUS**

(71) Applicant: Contemporary Amperex Technology Co., Limited, Ningde, Fujian 352100 (CN)
(72) Inventor: LI, Xing, Ningde, Fujian 352100 (CN); TANG, Yu, Ningde, Fujian 352100 (CN); JIN, Haizu, Ningde, Fujian 352100 (CN); ZHANG, Chenchen, Ningde, Fujian 352100 (CN); LI, Zhenhua, Ningde, Fujian 352100 (CN); XU, Chenyi, Ningde, Fujian 352100 (CN)
(74) Representative: Kraus & Lederer PartGmbB
(86) International application number: PCT/CN2022/113139
(87) International publication number: WO 2024/036528

(57) **Abstract**

This application discloses a box assembly, a battery, and an electric apparatus. The box assembly includes a frame, where the frame includes a bottom plate and side plates arranged around the bottom plate, and the bottom plate and the side plates jointly enclose an accommodating cavity; and at least one heat exchange beam, where the heat exchange beam is disposed in the accommodating cavity to divide the accommodating cavity into a plurality of accommodating sub-cavities, and a heat exchange passage is provided in the heat exchange beam for circulating a heat exchange medium. The heat exchange beam can improve the overall rigidity of the frame. **In** addition, the heat exchange passage is provided in the heat exchange beam for circulating the heat exchange medium, so that the heat exchange beam is integrated with the heat exchange function. This improves the space utilization of the box assembly, thereby increasing the energy density of the battery.

## Description

### TECHNICAL FIELD

This application relates to the battery field, and in particular to, a box assembly, a battery, and an electric apparatus.

### BACKGROUND

At present, traction batteries have been widely used in various fields in connection with energy storage, and market demands for the traction batteries grow as application fields of traction batteries expand continuously. To ensure the safe operation of a traction battery, typically a thermal management part needs to be disposed in the box assembly to improve the heat dissipation effects of the battery. However, in existing traction batteries, the thermal management part is usually disposed at the bottom of the box assembly. This reduces the space utilization of the box assembly and the energy density of the battery, greatly affecting the battery performance.

### SUMMARY

In view of the foregoing problems, this application provides a box assembly, a battery, and an electric apparatus, so as to improve the space utilization of the box assembly while meeting the heat dissipation requirements.

According to a first aspect, this application provides a box assembly including: a frame, where the frame includes a bottom plate and side plates arranged around the bottom plate, and the bottom plate and the side plates jointly enclose an accommodating cavity; and at least one heat exchange beam, where the heat exchange beam is disposed in the accommodating cavity to divide the accommodating cavity into a plurality of accommodating sub-cavities, and a heat exchange passage is provided in the heat exchange beam for circulating a heat exchange medium.

In the technical solution according to this embodiment of this application, the battery cell placed in the accommodating cavity can exchange heat with the heat exchange beam, so as to cool or heat the battery cell. The heat exchange beam can improve the overall rigidity of the frame. In addition, the heat exchange passage is provided in the heat exchange beam for circulating the heat exchange medium, so that the heat exchange beam is integrated with the heat exchange function. When applied to a battery, the box assembly can improve the space utilization of the battery, thereby increasing the energy density of the battery.

With reference to the first aspect, in some embodiments, the heat exchange beam includes: a beam body, where the beam body has a first side wall and a second side wall opposite each other in a thickness direction of the beam body; at least one first heat exchange plate, where the first heat exchange plate is disposed on the first side wall; and/or at least one second heat exchange plate, where the second heat exchange plate is disposed on the second side wall. Such structural design allows the beam body, the first heat exchange plate, and the second heat exchange plate to be formed separately before being assembled, simplifying the formation of the heat exchange beam.

With reference to the first aspect, in some embodiments, the first side wall is recessed to form at least one first accommodating groove, and any one of the first heat exchange plate(s) is disposed in one of the first accommodating grooves; and/or the second side wall is recessed to form at least one second accommodating groove, and any one of the second heat exchange plates is disposed in one of the second accommodating groove(s). Such structural design can reduce the thickness of the heat exchange beam, thereby reducing the volume of the heat exchange beam and further improving the space utilization of the box assembly applied to a battery.

With reference to the first aspect, in some embodiments, the heat exchange beam includes a beam body and at least one heat exchange plate, where a mounting cavity is provided in the beam body, and the heat exchange plate is disposed in the mounting cavity. Such structural design can not only reduce the thickness of the heat exchange beam to improve the space utilization of the box assembly applied to a battery, but also improve the assembly efficiency of the heat exchange beam.

With reference to the first aspect, in some embodiments, the heat exchange beam further includes a stiffener, and the stiffener is connected between the heat exchange plate and an inner wall of the mounting cavity. Such structural design can not only increase the structural strength of the heat exchange beam, but also conduct heat to enhance the heat exchange between the beam body and the heat exchange plate.

With reference to the first aspect, in some embodiments, a first flow passage is provided in the bottom plate for circulating the heat exchange medium. Such structural design allows the bottom plate and the heat exchange beam to exchange heat with a battery cell separately after the battery cell is placed in the accommodating cavity, improving the heat exchange performance.

With reference to the first aspect, in some embodiments, the box assembly further includes at least one first heat sink plate, and the first heat sink plate is disposed on a surface of the bottom plate facing or back away from the accommodating cavity. Such structural design allows the bottom plate and the first heat exchange plate to be formed separately before being assembled, simplifying the formation of the bottom plate and the first heat sink plate.

With reference to the first aspect, in some embodiments, the box assembly further includes at least one first heat sink plate, and at least one first accommodating cavity is provided in the bottom plate, where the first heat sink plate is disposed in the first accommodating cavity. Such structural design can not only reduce the thickness of the bottom plate to improve the space utilization of the box assembly applied to a battery, but also improve the assembly efficiency of the bottom plate and the first heat sink plate.

With reference to the first aspect, in some embodiments, the frame further includes a cover plate, where the cover plate is disposed at ends of the side plates away from the bottom plate to seal the accommodating cavity. Such structural design allows the box assembly to be formed into a closed box structure, helping protect the battery cell placed in the accommodating cavity.

With reference to the first aspect, in some embodiments, a second flow passage is provided in the cover plate for circulating the heat exchange medium. Such structural design allows the battery cell to exchange heat with the cover plate, improving the heat exchange performance.

With reference to the first aspect, in some embodiments, the box assembly further includes at least one second heat sink plate, and the second heat sink plate is disposed on a surface of the cover plate facing or back away from the accommodating cavity. Such structural design allows the cover plate and the second heat sink plate to be formed separately before being assembled, simplifying the formation of the cover plate and the second heat sink plate.

With reference to the first aspect, in some embodiments, the box assembly further includes at least one second heat sink plate, and at least one second accommodating cavity is provided in the cover plate, where the second heat sink plate is disposed in the second accommodating cavity. Such structural design can not only reduce the thickness of the cover plate to improve the space utilization of the box assembly applied to a battery, but also improve the assembly efficiency of the cover plate and the second heat sink plate.

According to a second aspect, an embodiment of this application provides a battery including a battery cell and the box assembly according to any one of the foregoing embodiments, where the accommodating sub-cavity is configured to accommodate the battery cell.

With reference to the second aspect, in some embodiments, the heat exchange beam is configured as a transverse heat exchange beam and/or a longitudinal heat exchange beam, and a size of the battery cell in a height direction of the heat exchange beam is smaller than a size of the battery cell in an extending direction of the heat exchange beam and a size of the battery cell in a thickness direction of the heat exchange beam. Such structural design allows the battery cells to be laid flat, resulting in a more uniform internal temperature of the battery cells and lowering the design requirements for the heat exchange beam in the height direction.

With reference to the second aspect, in some embodiments, the battery cell is provided with a pressure relief mechanism, and the pressure relief mechanism faces the heat exchange beam. Such structural design allows the heat exchange beam to exchange heat with hot emissions once the pressure relief mechanism bursts open, so as to avoid safety hazards caused by long-time heat accumulation at the place of burst.

With reference to the second aspect, in some embodiments, each of the battery cells is arranged adjacent to at least one of the heat exchange beams, and the pressure relief mechanism faces at least one of the adjacent heat exchange beams. Such structural design allows each battery cell to exchange heat with one or more adjacent heat exchange beams, improving the heat exchange effects.

With reference to the second aspect, in some embodiments, the battery cell is further provided with an electrode terminal, and the electrode terminal and the pressure relief mechanism are arranged on two adjacent or opposite surfaces of the battery cell respectively. With such structural design, the electrode terminal and the pressure relief mechanism are arranged on different surfaces of the battery cell, so that when the pressure relief mechanism bursts open, adverse effects such as short circuit and ignition under high pressure caused thereby on regions of electrical connection can be alleviated. In addition, the pressure relief mechanism is arranged facing the heat exchange beam, that is, the electrode terminal does not face the heat exchange beam. This can reduce the short circuit risk caused by the heat exchange medium escaped due to damage of the heat exchange beam.

With reference to the second aspect, in some embodiments, the battery includes a battery row formed by arranging a plurality of battery cells in a first direction, and the heat exchange beam extends in the first direction. Such structural design allows the heat exchange beams to extend in a length direction of the battery row, simplifying the distribution of the heat exchange beams in the accommodating cavity.

With reference to the second aspect, in some embodiments, an emission cavity is disposed in the heat exchange beam, where the emission cavity is suitable for collecting emissions from the pressure relief mechanism of the battery cell. Such structural design further enables the heat exchange beam to collect the emissions of the battery cell, making the internal structure of the battery more compact.

With reference to the second aspect, in some embodiments, the heat exchange beam is provided with at least one docking part, where the emission cavity is suitable for collecting the emissions from the pressure relief mechanism of the battery cell through the docking part. The docking part may be a through-hole structure or a weak portion structure, both of which can be used in the emission cavity for collecting the emissions when the pressure relief mechanism is actuated, so as to improve the safety.

With reference to the second aspect, in some embodiments, the docking part is provided in plurality, and the plurality of docking parts are spaced apart on the heat exchange beam in the first direction, where any one of the docking parts is configured to be provided in correspondence with the pressure relief mechanism of at least one of the battery cells. The docking part may be a through-hole communicating with the emission cavity, or a weak portion structure through which the emissions can enter the emission cavity when pressure inside the box reaches a limit. Correspondingly, the docking part and the pressure relief mechanism may be arranged in close proximity or opposite each other in a direction, so that the emissions from the pressure relief mechanism can quickly enter the emission cavity through the docking part.

With reference to the second aspect, in some embodiments, the battery row is provided in plurality, and at least two of the plurality of battery rows are stacked in a height direction of the heat exchange beam. Such structural design allows any one of the accommodating sub-cavities to accommodate a plurality of battery rows arranged in the height direction and thickness direction of the heat exchange beam, improving the space utilization of the box assembly.

With reference to the second aspect, in some embodiments, a plurality of docking parts are spaced apart in the height direction of the heat exchange beam, where any one of the docking parts is configured to be provided in correspondence with the pressure relief mechanism of at least one of the battery cells. The docking part may be a through-hole communicating with the emission cavity, or a weak portion structure through which the emissions can enter the emission cavity when pressure inside the box reaches a limit. Correspondingly, the docking part and the pressure relief mechanism may be arranged in close proximity or opposite each other in a direction, so that the emissions from the pressure relief mechanism can quickly enter the emission cavity through the docking part.

With reference to the second aspect, in some embodiments, the battery row is provided in plurality, and at least two of the plurality of battery rows are arranged side by side in a second direction, where the second direction is perpendicular to the first direction, and in the second direction, the heat exchange beam is disposed between at least some of pairs of adjacent battery rows. With such structural design, a heat exchange beam may be disposed between any two adjacent battery rows in the second direction, thereby improving the heat exchange effects. Alternatively, a heat exchange beam is disposed between some adjacent battery rows, and no heat exchange beam is disposed between the rest of adjacent battery rows, thereby reducing the number of heat exchange beams while ensuring the heat exchange effects. This improves the space utilization of the box assembly.

With reference to the second aspect, in some embodiments, the battery cell is a cylindrical battery cell, and an axial direction of the battery cell is parallel to a height direction of the heat exchange beam. The first side wall is recessed to form a plurality of first positioning grooves, and the second side wall is recessed to form a plurality of second positioning grooves, where any one of the first positioning grooves abuts against an outer peripheral surface of one of the battery cells, and any one of the second positioning grooves abuts against the outer peripheral surface of one of the battery cells. Such structural design can not only position the battery cell, but also increase the heat transfer area between the battery cell and the heat exchange beam, so as to improve the heat exchange performance.

According to a third aspect, an embodiment of this application provides an electric apparatus including the battery according to any one of the foregoing embodiments, where the battery is configured to supply electric energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:
FIG. 1 is a schematic structural diagram of a vehicle according to some embodiments of this application.
FIG. 2 is an exploded view of a structure of a battery according to some embodiments of this application.
FIG. 3 is a schematic structural diagram of a box assembly according to some embodiments of this application.
FIG. 4 is a schematic structural diagram of another box assembly according to some embodiments of this application.
FIG. 5 is a schematic structural diagram of a heat exchange beam according to some embodiments of this application.
FIG. 6 is a schematic structural diagram of the heat exchange beam shown in FIG. 5 from another angle.
FIG. 7 is a schematic structural diagram of a beam body of the heat exchange beam shown in FIG. 5.
FIG. 8 is a schematic structural diagram of the beam body shown in FIG. 7 from another angle.
FIG. 9 is a schematic structural diagram of another heat exchange beam according to some embodiments of this application.
FIG. 10 is a schematic diagram of an assembly relationship between a battery row and a heat exchange beam in the battery shown in FIG. 2.
FIG. 11 is a schematic diagram of another assembly relationship between a battery row and a heat exchange beam in the battery shown in FIG. 2.
FIG. 12 is a schematic structural diagram of a battery cell according to some embodiments of this application.
FIG. 13 is a schematic diagram of a partial structure of another battery according to some embodiments of this application.

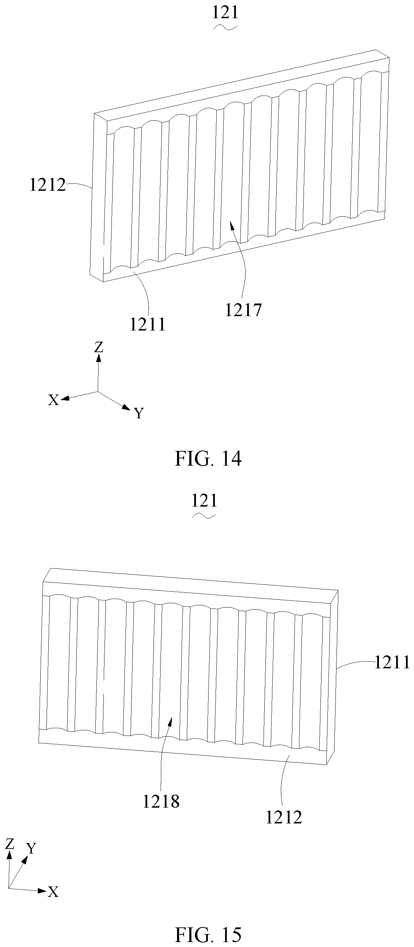

FIG. 14 is a schematic structural diagram of a heat exchange beam in the battery shown in FIG. 13.
FIG. 15 is a schematic structural diagram of the heat exchange beam shown in FIG. 14 from another angle.

### Reference signs:

1000: vehicle;
100: battery; 200: controller; 300: motor;
30l: box assembly;
11: frame; 111: bottom plate; 112: side plate; 113: cover plate; 12: heat exchange beam; 121: beam body; 1211: first side wall; 1212: second side wall; 1213: first accommodating groove; 1214: second accommodating groove; 1215: mounting cavity; 1216: stiffener; 1217: first positioning groove; 1218: second positioning groove; 122: heat exchange plate; 1221: first heat exchange plate; 1222: second heat exchange plate; 123: docking part; 13: accommodating cavity; 131: accommodating sub-cavity;
2: battery row;
21: battery group; 211: battery cell; 212: electrode terminal; and 213: pressure relief mechanism.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of some embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of some embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of some embodiments of this application, the term "a plurality of" means more than two (inclusive). Similarly, "a plurality of groups" means more than two (inclusive) groups, and "a plurality of pieces" means more than two (inclusive) pieces.

In the description of some embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of some embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

In the description of some embodiments of this application, the direction indicated by the arrow X in all accompanying drawings is a length direction, the direction indicated by the arrow Y is a width direction, and the direction indicated by the arrow Z is a vertical direction. The horizontal direction is a direction parallel to the horizontal plane, which may be the length direction or width direction mentioned above. In addition, the horizontal direction includes not only the direction absolutely parallel to the horizontal plane but also the directions approximately parallel to the horizontal plane as conventionally recognized in engineering. The vertical direction is a direction perpendicular to the horizontal plane. The vertical direction includes not only the direction absolutely perpendicular to the horizontal plane but also the directions approximately perpendicular to the horizontal plane as conventionally recognized in engineering. In addition, the directional words such as "up", "down", "top", and "bottom" mentioned in this application are all understood relative to the vertical direction.

For ease of understanding and illustration, directions will be described below based on the X, Y, Z coordinate system in the accompanying drawings.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

A traction battery typically includes a box assembly and a plurality of battery cells connected in series, parallel, or series-parallel. According to the spatial arrangement of the battery cells, the traction batteries can mainly be categorized as upright batteries, side-standing batteries, and flat-lying batteries. A traction battery generally includes a plurality of battery rows, where any one battery row includes a plurality of battery cells arranged in the horizontal direction.

The inventors have noticed that in the existing box assemblies, a thermal management part is usually disposed at the bottom of the box assembly to ensure the safe operation of the traction battery, and the thermal management part can exchange heat with the battery cell to improve the heat dissipation effects. However, the thermal management part occupies certain space inside the box assembly. This reduces the space utilization of the box assembly and the energy density of the battery, greatly affecting the battery performance.

To solve this technical problem, the applicant has found, through research, that a middle beam is usually disposed in an existing box assembly. The middle beam can separate two adjacent battery rows and improve the structural strength of the box assembly. Therefore, the thermal management part can be disposed on a surface of or inside the middle beam, so that the middle beam is integrated with the heat exchange function. This improves the space utilization of the box assembly, thereby increasing the energy density of the battery.

The box assembly disclosed in an embodiment of this application may be used in an electric apparatus not limited to a vehicle, a ship, or an aircraft. The electric apparatus may use a power supply system including the box assembly and battery disclosed in this application and the like, so as to improve the space utilization of the box assembly and increase the energy density of the battery.

An embodiment of this application provides an electric apparatus that uses a battery as a power source. The electric apparatus may be, but is not limited to, a mobile phone, a tablet, a laptop computer, an electric toy, an electric tool, an electric bicycle, an electric vehicle, a ship, a spacecraft, and the like. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description in the following embodiments, a vehicle is used as an example of the electric apparatus according to an embodiment of this application.

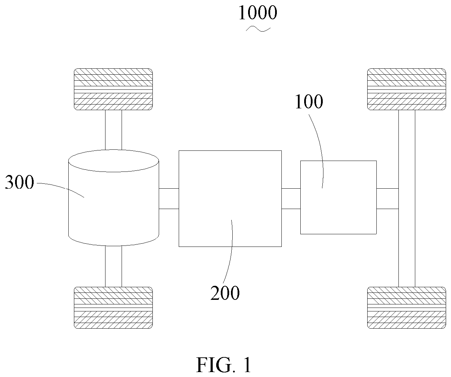

Referring to FIG. 1, FIG. 1 is a schematic structural diagram of a vehicle 1000 according to some embodiments of this application. The vehicle 1000 may be an oil-fueled vehicle, a gas-powered vehicle, or a new energy vehicle. The new energy vehicle may be a battery electric vehicle, a hybrid electric vehicle, an extended-range electric vehicle, or the like. A battery 100 is provided in the vehicle 1000, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, or driving of the vehicle 1000.

In some embodiments of this application, the battery 100 can be used as not only the operational power supply for the vehicle 1000 but also a driving power supply for the vehicle 1000, replacing all or a part of the fossil fuel or gas to provide driving power for the vehicle 1000.

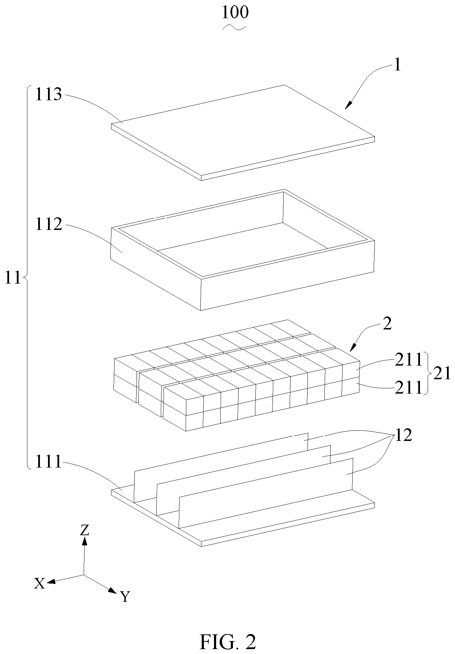

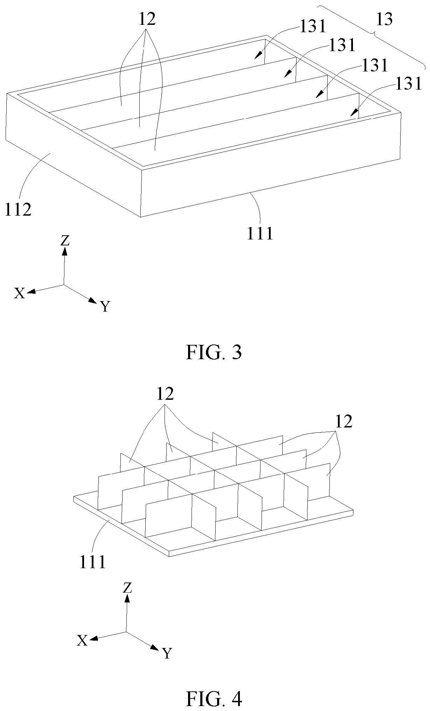

Referring to FIG. 2 and FIG. 3, FIG. 2 is an exploded view of a structure of a battery 100 according to some embodiments of this application, and FIG. 3 is a schematic structural diagram of a box assembly 1 according to some embodiments of this application. The box assembly 1 at least includes a frame 11 and at least one heat exchange beam 12, where the frame 11 includes a bottom plate 111 and side plates 112 arranged around the bottom plate 111, and the bottom plate 111 and the side plates 112 jointly enclose an accommodating cavity 13. The heat exchange beam 12 is disposed in the accommodating cavity 13 to divide the accommodating cavity 13 into a plurality of accommodating sub-cavities 131, and a heat exchange passage is provided in the heat exchange beam 12 for circulating a heat exchange medium.

The side plates 112 are arranged around the bottom plate 111, so that the bottom plate 111 and the side plates 112 jointly enclose the accommodating cavity 13. In other words, the frame 11 is configured to provide an accommodating space for the battery cell 211, and the frame 11 may be of various structures. The frame 11 may be made of a material with certain hardness and strength (such as an aluminum alloy). In this case, the frame 11 is not easily deformed when squeezed and collided, so that the box assembly 1 can have higher structural strength and better safety performance. The frame 11 may be in various shapes, such as a cylinder, a cuboid or a hexahedron. The frame 11 may be made of various materials, such as copper, iron, aluminum, stainless steel, aluminum alloy, or plastic. This is not particularly limited in this embodiment of this application.

The heat exchange beam 12 is disposed in the accommodating cavity 13, so that the accommodating cavity 13 can be divided by the heat exchange beam 12 into a plurality of accommodating sub-cavities 131, and any one of the accommodating sub-cavities 131 may accommodate one or more battery cells 211. The heat exchange passage is provided in the heat exchange beam 12 for circulating the heat exchange medium, so that the heat exchange beam 12 can exchange heat with the battery cell 211 for heating or cooling the battery 100. This guarantees the safe operation of the battery 100. In addition, when the battery cell 211 bursts open, heat tends to accumulate inside the battery 100 due to the influence of high-temperature emissions. In this case, the accumulated heat can be continuously dissipated by the heat exchange medium circulating in the heat exchange beam 12, so as to prevent adverse effects caused by heat accumulation on the internal structure of the battery 100. The heat exchange medium may be one or more of water, air, tetrafluoroethane, trifluoromethane, difluoroethane, and the like. There may be one or more heat exchange passages in the heat exchange beam 12, and the material of the heat exchange beam 12 may be the same as or different from that of the frame 11. This is not particularly limited in the embodiments of this application.

Optionally, referring to FIG. 4, FIG. 4 is a schematic structural diagram of another box assembly 1 according to some embodiments of this application. Some of the heat exchange beams 12 extend in an X-axis direction, and the rest of the heat exchange beams 12 extend in a Y-axis direction, so that the accommodating cavity 13 is divided into a plurality of accommodating sub-cavities 131 distributed like a grid. In this way, a plurality of surfaces of at least one battery cell 211 each exchange heat with one heat exchange beam 12. This increases the heat exchange area between the battery cell 211 and the heat exchange beam 12, improving the heat exchange effects.

It can be understood that all heat exchange beams 12 may extend only in the X-axis direction or Y-axis direction.

After the battery cell 211 is placed in the accommodating cavity 13, the battery cell 211 can exchange heat with the heat exchange beam 12, so as to cool or heat the battery cell 211. The heat exchange beam 12 can improve the overall rigidity of the frame 11. In addition, the heat exchange passage is provided in the heat exchange beam 12 for circulating the heat exchange medium, so that the heat exchange beam 12 is integrated with the heat exchange function. This improves the space utilization of the box assembly 1 applied to the battery 100, thereby increasing the energy density of the battery 100.

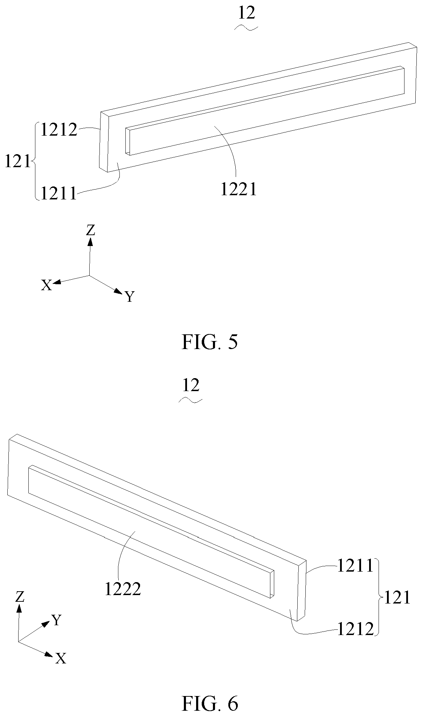

According to some embodiments of this application, optionally, refer to FIG. 5 and FIG. 6. FIG. 5 is a schematic structural diagram of a heat exchange beam 12 according to some embodiments of this application, and FIG. 6 is a schematic structural diagram of the heat exchange beam 12 shown in FIG. 5 from another angle. The heat exchange beam 12 includes: a beam body 121, where the beam body 121 has a first side wall 1211 and a second side wall 1212 opposite each other in a thickness direction of the beam body 121; at least one first heat exchange plate 1221, where the first heat exchange plate 1221 is disposed on the first side wall 1211; and/or at least one second heat exchange plate 1222, where the second heat exchange plate 1222 is disposed on the second side wall 1212.

Heat exchange plates 122 may be disposed only on the first side wall 1211 or the second side wall 1212. Alternatively, some of the heat exchange plates 122 are disposed on the first side wall 1211 and the rest of heat exchange plates 122 are disposed on the second side wall 1212, where the heat exchange plates 122 disposed on the first side wall 1211 are referred to as the first heat exchange plates 1221 and the heat exchange plates 122 disposed on the second side wall 1212 are referred to as the second heat exchange plates 1222. One or more heat exchange plates 122 may be disposed on the first side wall 1211 and/or the second side wall 1212. Any one of the heat exchange plates 122 can be disposed on the first side wall 1211 or the second heat exchange plate 1222 by welding, adhesion, screw fitting, plug connection, or by any other means. This is not particularly limited in this embodiment of this application.

With the first heat exchange plate 1221 disposed on the first side wall 1211 and/or the second heat exchange plate 1222 disposed on the second side wall 1212, the beam body 121, the first heat exchange plate 1221, and the second heat exchange plate 1222 can be formed separately before assembled, simplifying the formation of the heat exchange beam 12.

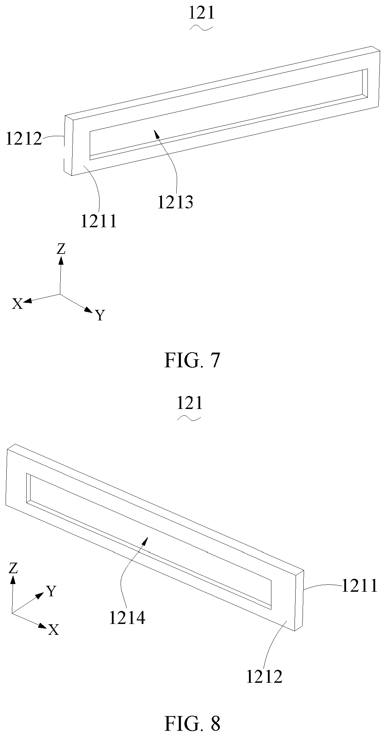

According to some embodiments of this application, optionally, refer to FIG. 7 and FIG. 8. FIG. 7 is a schematic structural diagram of a beam body 121 of the heat exchange beam 12 shown in FIG. 5, and FIG. 8 is a schematic structural diagram of the beam body 121 shown in FIG. 7 from another angle. The first side wall 1211 is recessed to form at least one first accommodating groove 1213, and any one of the first heat exchange plates 1221 is disposed in one of the first accommodating groove(s) 1213; and/or the second side wall 1212 is recessed to form at least one second accommodating groove 1214, and any one of the second heat exchange plates 1222 is disposed in one of the second accommodating groove(s) 1214.

When the first heat exchange plates 1221 are disposed on the first side wall 1211, the first side wall 1211 is recessed to form the first accommodating groove 1213, so that at least part of any one of the first heat exchange plates 1221 can be accommodated in the corresponding first accommodating groove 1213. In this way, the first heat exchange plates 1221 do not protrude relative to the first side wall 1211. When the second heat exchange plates 1222 are disposed on the second side wall 1212, the second side wall 1212 is recessed to form the second accommodating groove 1214, so that at least part of any one of the second heat exchange plates 1222 can be accommodated in the corresponding second accommodating groove 1214. In this way, the second heat exchange plates 1222 do not protrude relative to the second side wall 1212.

The first side wall 1211 is recessed to form the first accommodating groove 1213, and/or the second side wall 1212 is recessed to form the second accommodating groove 1214. This can reduce the thickness of the heat exchange beam 12, thereby reducing the volume of the heat exchange beam 12 and further improving the space utilization of the box assembly 1 applied to the battery 100.

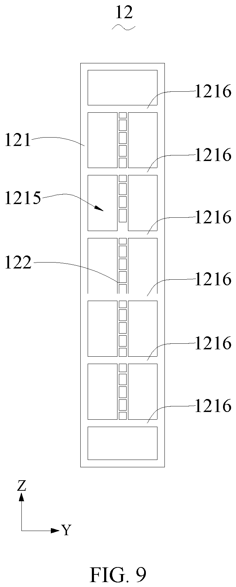

According to some embodiments of this application, optionally, referring to FIG. 9, FIG. 9 is a schematic structural diagram of another heat exchange beam 12 according to some embodiments of this application. The heat exchange beam 12 includes a beam body 121 and at least one heat exchange plate 122, where the beam body 121 is provided with a mounting cavity 1215, and the heat exchange plate 122 is disposed in the mounting cavity 1215.

With the mounting cavity 1215 provided in the beam body 121, the heat exchange plates 122 can be accommodated in this mounting cavity 1215, and there may be one or more heat exchange plates 122. When there are a plurality of heat exchange plates 122, one mounting cavity 1215 may be provided, and the plurality of heat exchange plates 122 may all be disposed in the mounting cavity 1215. Alternatively, when there are a plurality of heat exchange plates 122, a plurality of mounting cavities 1215 may be provided, and any one of the mounting cavities 1215 accommodates one or more heat exchange plates 122. This is not particularly limited in this embodiment of this application.

The mounting cavity 1215 is formed in the beam body 121, and the heat exchange plate 122 is disposed in the mounting cavity 1215. This can not only reduce the thickness of the heat exchange beam 12 to improve the space utilization of the box assembly 1 applied to the battery 100, but also improve the assembly efficiency of the heat exchange beam 12.

According to some embodiments of this application, optionally, to ensure the structural strength of the heat exchange beam 12, a proportion of the total volume of the mounting cavity 1215 to the total volume of the heat exchange beam 12 is less than or equal to 90%. Preferably, the proportion of the total volume of the mounting cavity 1215 to the total volume of the heat exchange beam 12 is less than or equal to 80%.

According to some embodiments of this application, optionally, still referring to FIG. 9, the heat exchange beam 12 further includes a stiffener 1216, and the stiffener 1216 is connected between the heat exchange plate 122 and an inner wall of the mounting cavity 1215.

The stiffener 1216 can limit the position of the heat exchange plate 122 in the mounting cavity 1215, and heat of the beam body 121 can be conducted to the heat exchange plate 122 via the stiffener 1216. The stiffener 1216 and the beam body 121 are made of the same material, and the stiffener 1216 and the beam body 121 are integrally formed. Some of the stiffeners 1216 may be connected between an inner side of the first side wall 1211 and a surface of the heat exchange plate 122 facing the inner side of the first side wall 1211, the rest of the stiffeners 1216 may be connected between an inner side of the second side wall 1212 and a surface of the heat exchange plate 122 facing the inner side of the second side wall 1212. Alternatively, all the stiffeners 1216 may be connected between the inner side of the first side wall 1211 and the surface of the heat exchange plate 122 facing the inner side of the first side wall 1211, or all the stiffeners 1216 may be connected between the inner side of the second side wall 1212 and the surface of the heat exchange plate 122 facing the inner side of the second side wall 1212.

The stiffener 1216 is connected between the heat exchange plate 122 and the inner wall of the mounting cavity 1215. This can not only increase the structural strength of the heat exchange beam 12, but also conduct heat to enhance the heat exchange between the beam body 121 and the heat exchange plate 122.

According to some embodiments of this application, optionally, a first flow passage is provided in the bottom plate 111 for circulating the heat exchange medium.

With the first flow passage provided in the bottom plate 111, a bottom surface of the battery cell 211 facing the bottom plate 111 can exchange heat with the bottom plate 111. In this way, after the battery cell 211 is disposed in the accommodating cavity 13, both the bottom plate 111 and the heat exchange beam 12 can exchange heat with the battery cell 211, improving the heat exchange performance.

According to some embodiments of this application, optionally, the box assembly 1 further includes at least one first heat sink plate, and the first heat sink plate is disposed on a surface of the bottom plate 111 facing or back away from the accommodating cavity 13.

The structure of the first heat sink plate is similar to or the same as that of the heat exchange plate 122, and one or more first heat sink plates may be provided. The first heat sink plate may be disposed on the surface of the bottom plate 111 facing the accommodating cavity 13, so that the battery cell 211 can directly exchange heat with the first heat sink plate. Alternatively, the first heat sink plate may be disposed on the surface of the bottom plate 111 back away from the accommodating cavity 13, so that heat of the battery cell 211 can be transferred to the first heat sink plate through the bottom plate 111, thereby implementing the heat exchange between the battery cell 211 and the first heat sink plate. Disposed outside the accommodating cavity 13, the first heat sink plate does not occupy space in the accommodating cavity 13.

With the first heat sink plate disposed on the surface of the bottom plate 111 facing or back away from the accommodating cavity 13, the bottom plate 111 and the first heat exchange plate 1221 can be formed separately and then assembled, simplifying the formation of the bottom plate 111 and the first heat sink plate.

According to some embodiments of this application, optionally, the box assembly 1 further includes at least one first heat sink plate, and at least one first accommodating cavity is provided in the bottom plate 111, where the first heat sink plate is disposed in the first accommodating cavity.

The structure of the first heat sink plate is similar to or the same as that of the heat exchange plate 122, and one or more first heat sink plates may be provided. When there are a plurality of first heat sink plates, one first accommodating cavity may be provided, and the plurality of first heat sink plates may all be disposed in the first accommodating cavity. Alternatively, when there are a plurality of first heat sink plates, a plurality of first accommodating cavities may be provided, and any one of the first accommodating cavities accommodates one or more first heat sink plates.

The first accommodating cavity is formed in the bottom plate 111 and the first heat sink plate is disposed in the first accommodating cavity. This can not only reduce the thickness of the bottom plate 111 to improve the space utilization of the box assembly 1 applied to the battery 100, but also improve the assembly efficiency of the bottom plate 111 and the first heat sink plate.

According to some embodiments of this application, optionally, still referring to FIG. 2, the frame 11 further includes a cover plate 113, where the cover plate 113 is disposed at ends of the side plates 112 away from the bottom plate 111 to seal the accommodating cavity 13.

The cover plate 113 is configured to seal the accommodating cavity 13, and the cover plate 113 fits the accommodating cavity 13 in shape, for example, a circle, a hexagon, or a square. With the cover plate 113 covering the side plates 112, the box assembly 1 can be formed into a closed box structure, helping protect the battery cell 211 placed in the accommodating cavity 13.

According to some embodiments of this application, optionally, a second flow passage is provided in the cover plate 113 for circulating the heat exchange medium.

With the first flow passage provided in the cover plate 113, a top surface of the battery cell 211 facing the cover can exchange heat with the cover plate 113. In this way, after the battery cell 211 is placed in the accommodating cavity 13, the battery cell 211 can also exchange heat with the cover plate 113, improving the heat exchange performance.

According to some embodiments of this application, optionally, the box assembly 1 further includes at least one second heat sink plate, and the second heat sink plate is disposed on a surface of the cover plate 113 facing or back away from the accommodating cavity 13.

The structure of the second heat sink plate is similar to or the same as that of the heat exchange plate 122, and one or more second heat sink plates may be provided. The second heat sink plate may be disposed on the surface of the cover plate 113 facing the accommodating cavity 13, so that the battery cell 211 can directly exchange heat with the second heat sink plate. Alternatively, the second heat sink plate may be disposed on the surface of the cover plate 113 back away from the accommodating cavity 13, so that heat of the battery cell 211 can be transferred to the second heat sink plate through the cover plate 113, thereby implementing the heat exchange between the battery cell 211 and the second heat sink plate. Disposed outside the accommodating cavity 13, the second heat sink plate does not occupy space in the accommodating cavity 13.

With the second heat sink plate disposed on the surface of the cover plate 113 facing or back away from the accommodating cavity 13, the cover plate 113 and the second heat sink plate can be formed separately and then assembled, simplifying the formation of the cover plate 113 and the second heat sink plate.

According to some embodiments of this application, optionally, the box assembly 1 further includes at least one second heat sink plate, and at least one second accommodating cavity is provided in the cover plate 113, where the second heat sink plate is disposed in the second accommodating cavity.

The structure of the second heat sink plate is similar to or the same as that of the heat exchange plate 122, and one or more second heat sink plates may be provided. When there are a plurality of second heat sink plates, one second accommodating cavity may be provided, and the plurality of second heat sink plates may all be disposed in the second accommodating cavity. Alternatively, when there are a plurality of second heat sink plates, a plurality of second accommodating cavities may be provided, and any one of the second accommodating cavities accommodates one or more second heat sink plates.

The second accommodating cavity is formed in the cover plate 113 and the second heat sink plate is disposed in the second accommodating cavity. This can not only reduce the thickness of the cover plate 113 to improve the space utilization of the box assembly 1 applied to the battery 100, but also improve the assembly efficiency of the cover plate 113 and the second heat sink plate.

According to some embodiments of the application, referring to FIG. 2 and FIG. 3, this application provides a box assembly 1 including a frame 11 and a plurality of heat exchange beams 12. The frame 11 includes a bottom plate 111 and side plates 112 arranged around the bottom plate 111, and the bottom plate 111 and the side plates 112 jointly enclose an accommodating cavity 13. The heat exchange beam 12 is disposed in the accommodating cavity 13 to divide the accommodating cavity 13 into a plurality of accommodating sub-cavities 131, and a heat exchange passage is provided in the heat exchange beam 12 for circulating a heat exchange medium. A plurality of heat exchange plates 122 are spaced apart in a Y-axis direction, and any one of the heat exchange plates 122 extends in an X-axis direction. The heat exchange beam can improve the overall rigidity of the frame 11. In addition, the heat exchange passage is provided in the heat exchange beam 12 for circulating the heat exchange medium, so that the heat exchange beam 12 is integrated with the heat exchange function. This improves the space utilization of the box assembly 1 applied to a battery 100, thereby increasing the energy density of the battery 100.

According to some embodiments of this application, this application further provides a battery 100 including the box assembly 1 described in any one of the foregoing solutions.

According to some embodiments of this application, referring to FIG. 2, the battery 100 includes a battery cell 211 and the box assembly 1, where the accommodating sub-cavity 131 is configured to accommodate the battery cell 211.

Any one of the accommodating sub-cavity 131 may accommodate one or more battery cells 211. A plurality of battery cells 211 can be electrically connected in series, parallel, or series-parallel, where a series-parallel connection refers to a combination of series and parallel connections among the plurality of battery cells 211. The battery cell 211 may be a primary battery 100 or a secondary battery 100, a lithium-sulfur battery 100, a sodium-ion battery 100, or a magnesium-ion battery 100, without being limited thereto. The battery cell 211 may be cylindrical, flat, rectangular, or of any other shapes. That is, the battery cell 211 may be a cylindrical battery cell, a prismatic battery cell, a pouch battery cell, or the like.

The box assembly 1 is configured to provide an accommodating cavity 13 for accommodating a plurality of battery cells 211. Heat will be generated during charging and discharging of the battery cell 211. If the temperature of the battery cell 211 is excessively high or low, the operation performance and service life of the battery 100 will be affected. The heat exchange beam 12 can also exchange heat with the battery cells 211 to ensure the safe operation of all battery cells 211.

After the battery cell 211 is placed in the accommodating cavity 13, the battery cell 211 can exchange heat with the heat exchange beam 12, so as to cool or heat the battery cell 211. The heat exchange beam 12 can improve the overall rigidity of the frame 11. In addition, the heat exchange passage is provided in the heat exchange beam 12 for circulating the heat exchange medium, so that the heat exchange beam 12 is integrated with the heat exchange function. This improves the space utilization of the box assembly 1, thereby increasing the energy density of the battery 100.

According to some embodiments of this application, optionally, still referring to FIG. 2, the heat exchange beam 12 is configured as a transverse heat exchange beam and/or a longitudinal heat exchange beam, and a size of the battery cell 211 in a height direction of the heat exchange beam 12 is smaller than a size of the battery cell 211 in an extending direction of the heat exchange beam 12 and a size of the battery cell 211 in a thickness direction of the heat exchange beam 12.

All heat exchange beams 12 may be configured as transverse heat exchange beams. In other words, the heat exchange beams 12 extend in a length direction of the box assembly 1. Alternatively, all heat exchange beams 12 may be configured as longitudinal heat exchange beams. In other words, the heat exchange beams 12 extend in a width direction of the box assembly 1. Alternatively, some of the heat exchange beams 12 are configured as transverse heat exchange beams and the rest of heat exchange beams 12 are configured as longitudinal heat exchange beams, so that the heat exchange beams 12 are distributed like a grid.

The size of the battery cell 211 in the height direction of the heat exchange beam 12 is smaller than the size of the battery cell 211 in the extending direction of the heat exchange beam 12 and the size of the battery cell 211 in the thickness direction of the heat exchange beam 12, so that the battery cell 211 is laid flat in the accommodating cavity 13.

If the battery cell 211 is placed upright, the amount of electrolyte is different along the vertical direction of the battery cell 211, resulting in a great temperature difference along the vertical direction of the battery cell 211. A temperature difference also exists between the middle position and two ends of a battery row 2. To enable the heat exchange beam 12 to fully exchange heat with the battery row 2, the design of the heat exchange beam 12 will become more complicated and less flexible.

If the battery cell 211 is laid flat, the amount of electrolyte is evenly distributed along the vertical direction of the battery cell 211, resulting in a uniform temperature of the battery cell 211 along the vertical direction. This lowers the design requirements for the heat exchange beam 12, improves the design flexibility of the heat exchange beam 12, and extends the service life of the box assembly 1 and the battery 100. Side surfaces (surfaces other than a largest surface) of the battery cell 211 face the heat exchange beam 12. Compared with the largest surface of the battery cell 211, the side surfaces of the battery cell 211 present a low degree of swelling and will not press against the heat exchange beam 12 in the event of deformation, thereby preventing causing damage to the heat exchange beam 12.

With the battery cells 211 laid flat, a relatively uniform temperature is achieved inside the battery cells 211, lowering the design requirements for the heat exchange beam 12 in the height direction.

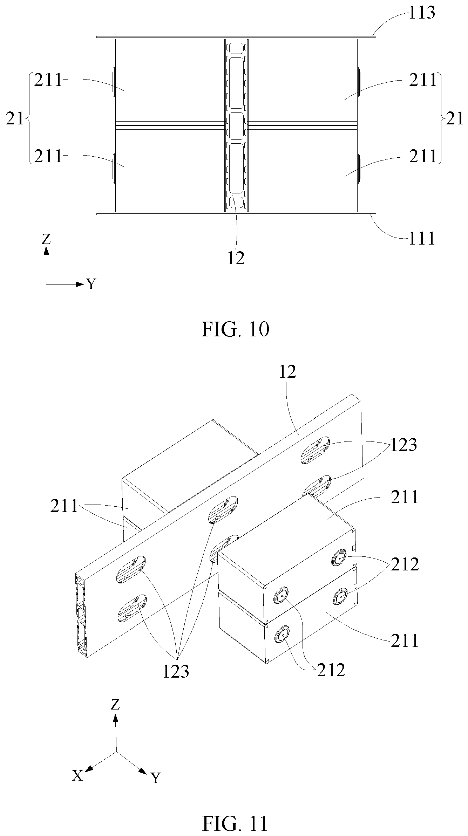

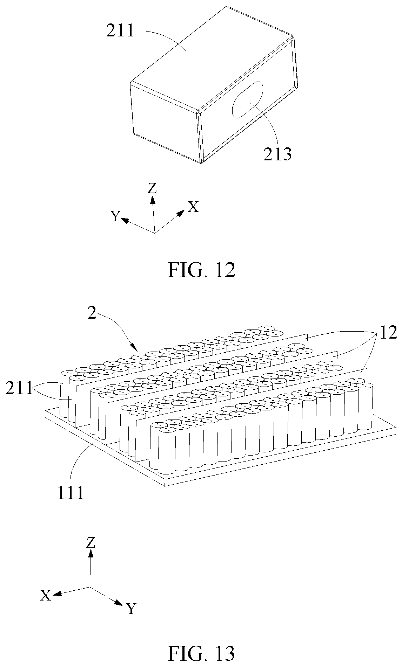

According to some embodiments of this application, optionally, referring to FIG. 10 to FIG. 12, FIG. 10 is a schematic diagram of an assembly relationship between a battery row 2 and a heat exchange beam 12 in the battery 100 shown in FIG. 2, FIG. 11 is a schematic diagram of another assembly relationship between a battery row 2 and a heat exchange beam 12 in the battery 100 shown in FIG. 2, and FIG. 12 is a schematic structural diagram of a battery cell 211 according to some embodiments of this application. The battery cell 211 is provided with a pressure relief mechanism 213, and the pressure relief mechanism 213 faces the heat exchange beam 12.

The pressure relief mechanism 213 includes, but is not limited to, an explosion-proof valve or other components as long as high-temperature emissions can be discharged from the pressure relief mechanism 213 to release the pressure inside the battery cell 211 in the event of thermal runaway of the battery cell 211. This is not particularly limited in this embodiment of this application.

When thermal runaway occurs in the battery cell 211, high-temperature emissions can break through the pressure relief mechanism 213, and the broken pressure relief mechanism 213 facilitates discharge of the high-temperature emissions, preventing the battery cell 211 from exploding. In this embodiment of this application, the pressure relief mechanism 213 is disposed on one surface of the battery cell 211 facing the heat exchange beam 12. This allows the heat exchange beam 12 to exchange heat with high-temperature emissions once the pressure relief mechanism 213 bursts open, so as to avoid safety hazards caused by long-time heat accumulation at the place of burst.

According to some embodiments of this application, optionally, each of battery cells 211 is arranged adjacent to at least one of the heat exchange beams 12, and the pressure relief mechanism 213 faces at least one of its adjacent heat exchange beams 12.

When a plurality of battery cells 211 are placed in the accommodating sub-cavity 131, at least one surface of the battery cell is close to and faces the heat exchange beam 12, where the at least one surface close to and facing the heat exchange beam 12 is provided with the pressure relief mechanism 213. In other words, one or more pressure relief mechanisms 213 may be disposed on the battery cell 211, helping shorten the distance between the pressure relief mechanism 213 and the heat exchange beam 12 and improving the heat exchange effects.

According to some embodiments of this application, optionally, still referring to FIG. 11 and FIG. 12, the battery cell 211 is further provided with an electrode terminal 212, and the electrode terminal 212 and the pressure relief mechanism 213 are arranged on two adjacent or opposite surfaces of the battery cell 211 respectively.

The electrode terminal 212 is configured for contact with the electrolyte inside the battery cell 211 for electric energy input or output. One battery cell 211 is provided with two electrode terminals 212, specifically a positive electrode terminal and a negative electrode terminal. A material of the electrode terminal 212 includes, but is not limited to, any one of iron, copper, aluminum, gold, silver, any other conductive metal, or an alloy thereof. This is not particularly limited in this embodiment of this application.

The pressure relief mechanism 213 is disposed on one surface of the battery cell 211 facing the heat exchange beam 12, and the electrode terminal 212 is disposed on a surface adjacent to or opposite that surface. The electrode terminal 212 and the pressure relief mechanism 213 are arranged on different surfaces of the battery cell 211, so that when the pressure relief mechanism 213 bursts open, adverse effects such as short circuit and high-voltage ignition caused thereby on regions of electrical connection can be alleviated. In addition, the pressure relief mechanism 213 is arranged facing the heat exchange beam 12, that is, the electrode terminal 212 does not face the heat exchange beam 12. This can reduce the short circuit risk caused by the heat exchange medium escaped due to damage of the heat exchange beam 12.

According to some embodiments of this application, optionally, still referring to FIG. 2, the battery 100 includes a battery row 2 formed by a plurality of battery cells 211 arranged in a first direction, and the heat exchange beam 12 extends in the first direction.

The plurality of battery cells 211 may be arranged in the first direction (an X-axis direction) to form one battery row 2, and one accommodating sub-cavity 131 can accommodate one or more battery rows 2. The heat exchange beam 12 extends in the first direction. In other words, the length direction of the heat exchange beam 12 is parallel to the length direction of the battery row 2, so that each of the battery cells 211 in the battery row 12 can exchange heat with the heat exchange beam 12, improving the heat exchange effects. In this embodiment of this application, 10 battery cells 211 may be arranged in the first direction (X-axis direction) in one battery row 2.

The heat exchange beams 12 extends in the length direction of the battery row 2, which simplifies the distribution of the heat exchange beams 12 in the accommodating cavity 13, thereby simplifying the structure of the box assembly 1.

According to some embodiments of this application, optionally, still referring to FIG. 11, an emission cavity (not shown in the figure) is disposed in the heat exchange beam 12, where the emission cavity is suitable for collecting emissions from the pressure relief mechanism 213 of the battery cell 211.

With the emission cavity provided in the heat exchange beam 12, high-temperature emissions can enter the emission cavity when the pressure relief mechanism 213 bursts open. This further enables the heat exchange beam 12 to collect the emissions of the battery cell 211, making the internal structure of the battery 100 more compact.

According to some embodiments of this application, optionally, still referring to FIG. 11, the heat exchange beam 12 is provided with at least one docking part 123, where the emission cavity is suitable for collecting the emissions from the pressure relief mechanism 213 of the battery cell 211 through the docking part 123.

The docking part 123 may be a through-hole structure or a weak portion structure, both of which can be used in the emission cavity for collecting the emissions when the pressure relief mechanism 213 bursts open, so as to improve the safety. In this embodiment of this application, the docking part 123 may be a through-hole structure, and the through-hole structure may be in the shape of a circle, a square, a rhombus, an oval, or the like.

According to some embodiments of this application, optionally, a plurality of docking parts 123 are provided, and the plurality of docking parts 123 are spaced apart on the heat exchange beam 12 in the first direction, where any one of the docking parts 123 is configured to be provided in correspondence with the pressure relief mechanism 213 of at least one of the battery cells 211.

The docking part 123 may be a through-hole structure communicating with the emission cavity, or a weak portion structure through which the emissions can enter the emission cavity when pressure inside the box reaches a limit. Correspondingly, the docking part 123 and the pressure relief mechanism 213 may be arranged in close proximity or opposite each other in a direction, so that the emissions from the pressure relief mechanism 213 can quickly enter the emission cavity through the docking part 123.

The number of docking parts 123 arranged in the first direction (X-axis direction) may be greater than or equal to the number of battery cells 211 in the battery row 2, so that each battery cell 211 corresponds to one docking part 123. In this embodiment of this application, the number of docking parts 123 arranged in the first direction (X-axis direction) is equal to the number of battery cells 211 in the battery row 2, and two pressure relief mechanisms 213 arranged on two opposite battery cells 211 in two battery rows 2 located on two sides of the heat exchange beam 12 correspond to a same docking part 123.

With the pressure relief mechanism 213 arranged facing the docking part 123 on the heat exchange beam 12, high-temperature emissions can enter the emission cavity through the docking part 123 once the pressure relief mechanism 213 bursts open. This prevents direct impact of the high-temperature emissions on the heat exchange beam 12, improving the pressure relief effects.

According to some embodiments of this application, optionally, to guarantee the structural strength of the heat exchange beam 12, the docking part 123 may be a through-hole structure, the area of the through-hole structure needs to be equal to or larger than the area of the pressure relief mechanism 213, and a proportion of the total area of a plurality of through-hole structures to the surface area of the heat exchange beam 12 is less than or equal to 30%. Preferably, the proportion of the total area of the plurality of through-hole structures to the surface area of the heat exchange beam 12 may be 25%.

According to some embodiments of this application, optionally, to guarantee the gas exhaust effect of the heat exchange beam 12, a distance between the pressure relief mechanism 213 and the heat exchange beam 12 is greater than or equal to 0.1 mm and equal to or less than 20 mm. Preferably, the distance between the pressure relief mechanism 213 and the heat exchange beam 12 is greater than or equal to 0.5 mm and equal to or less than 15 mm.

According to some embodiments of this application, to guarantee the heat exchange effects of the heat exchange beam 12, a numerical proportion of the total volume of the mounting cavity 1215 to the electric quantity of the battery 100 is greater than or equal to 0.0004. Preferably, the numerical proportion of the total volume of the mounting cavity 1215 to the electric quantity of the battery 100 may be 0.001.

According to some embodiments of this application, optionally, still referring to FIG. 2, the battery row 2 is provided in plurality, and at least two of the plurality of battery rows 2 are stacked in a height direction of the heat exchange beam 12.

At least two battery rows 2 are stacked in the height direction of the heat exchange beam 12 to form a battery cell assembly, and at least two battery cells 211 stacked in the height direction of the heat exchange beam 12 (Z-axis direction) form a battery group 21. In this embodiment of this application, one battery cell assembly includes two battery rows 2 stacked in the height direction of the heat exchange beam 12. That is, one battery group 21 includes two battery cells 211.

In this way, any one of the accommodating sub-cavities 131 can accommodate a plurality of battery rows 2 arranged in the height direction and thickness direction of the heat exchange beam 12, improving the space utilization of the box assembly 1 applied to the battery 100.

According to some embodiments of this application, optionally, still referring to FIG. 11, a plurality of docking parts 123 are spaced apart in the height direction of the heat exchange beam 12, where any one of the docking parts 123 is configured to be provided in correspondence with the pressure relief mechanism 213 of at least one of the battery cells 211.

The docking part 123 may be a through-hole structure communicating with the emission cavity, or a weak portion structure through which the emissions can enter the emission cavity when pressure inside the box reaches a limit. Correspondingly, the docking part 123 and the pressure relief mechanism 213 may be arranged in close proximity or opposite each other in a direction, so that the emissions from the pressure relief mechanism 213 can quickly enter the emission cavity through the docking part 123.

The number of docking parts 123 arranged in the height direction of the heat exchange beam 12 (Z-axis direction) may be greater than or equal to the number of battery rows 2 in one battery cell assembly, so that each battery cell 211 corresponds to one docking part 123. In this embodiment of this application, the number of docking parts 123 arranged in the height direction of the heat exchange beam 12 (Z-axis direction) is equal to the number of battery rows 2 in one battery cell assembly.

With the plurality of docking parts 123 arranged in the height direction of the heat exchange beam 12, high-temperature emissions can enter the emission cavity through the docking part 123 once the pressure relief mechanism 213 bursts open. This prevents direct impact of the high-temperature emissions on the heat exchange beam 12, improving the pressure relief effects.

According to some embodiments of this application, optionally, the battery row 2 is provided in plurality, and at least two of the plurality of battery rows 2 are arranged side by side in a second direction, where the second direction is perpendicular to the first direction, and in the second direction, the heat exchange beam 12 is disposed between at least some of pairs of adjacent battery rows 2.

At least two battery rows 2 are arranged in the second direction (Y-axis direction), and in the second direction (Y-axis direction), the heat exchange beam 12 may be disposed between any two adjacent battery rows 2, thereby improving the heat exchange effects. For example, four battery rows 12 may be arranged in the second direction (Y-axis direction), and three heat exchange beams 12 are provided. The three heat exchange beams 12 can divide the accommodating cavity 13 into four independent accommodating sub-cavities 131, and one accommodating sub-cavity 131 can accommodate one battery row 2. That is, one heat exchange beam 12 is disposed between any two adjacent battery rows 2.

Alternatively, a heat exchange beam is disposed between some adjacent battery rows 2, while no heat exchange beam is disposed between the rest of adjacent battery rows. For example, eight battery rows 12 may be arranged in the second direction (Y-axis direction), and three heat exchange beams 12 are provided. The three heat exchange beams 12 can divide the accommodating cavity 13 into four independent accommodating sub-cavities 131, and one accommodating sub-cavity 131 can accommodate two battery rows 2 arranged in the second direction (Y-axis direction). That is, a heat exchange beam 12 is disposed between only some adjacent battery rows 2.

The heat exchange effects can be improved by disposing the heat exchange beam 12 between any two adjacent battery rows 2 in the second direction (Y-axis direction). With the heat exchange beam 12 disposed between some of adjacent battery rows 2, the number of heat exchange beams 12 is reduced while ensuring the heat exchange effects. This improves the space utilization of the box assembly 1 applied to the battery 100.

According to some embodiments of this application, optionally, referring to FIG. 13, FIG. 13 is a schematic diagram of a partial structure of another battery 100 according to some embodiments of this application. The battery cell 211 is a cylindrical battery cell, and an axial direction of the battery cell 211 is parallel to a height direction of the heat exchange beam 12. The first side wall 1211 is recessed to form a plurality of first positioning grooves 1217, and the second side wall 1212 is recessed to form a plurality of second positioning grooves 1218, where any one of the first positioning grooves 1217 abuts against an outer peripheral surface of one of the battery cells 211, and any one of the second positioning grooves 1218 abuts against the outer peripheral surface of one of the battery cells 211.

The battery cell 211 may have a cylindrical housing, and the battery cell 211 is placed upright In other words, the axial direction of the battery cell 211 is parallel to the height direction of the heat exchange beam 12. One battery row includes at least two battery cells 211 arranged in the first direction (X-axis direction), and any one accommodating sub-cavity 131 accommodates at least two battery rows 2 arranged in the second direction (Y-axis direction).

In this embodiment of this application, one battery row 2 includes 15 battery cells arranged in the first direction (X-axis direction), and any one accommodating sub-cavity 131 accommodates two battery rows 2 arranged in the second direction (Y-axis direction). The first side wall 1211 is recessed to form a first positioning groove 1217, and the second side wall 1212 is recessed to form a second positioning groove 1218, so that both the first positioning groove 1217 and the second positioning groove 1218 can abut against the outer peripheral surface of the battery cell 211. The number of first positioning grooves 1217 and second positioning grooves 1218 is the same as that of battery cells 211 in one battery row 2.

It can be understood that only the first positioning groove 1217 or second positioning groove 1218 may be formed on the beam body 121.

The battery cell 211 is placed upright, facilitating quick arrangement of the battery row 2. With the first positioning groove 1217 disposed on the first side wall 1211 and/or the second positioning groove 1218 disposed on the second side wall 1212, the battery cell 211 can be positioned, and the heat transfer area between the battery cell 211 and the heat exchange beam 12 can be increased, improving the heat exchange performance.

According to some embodiments of this application, optionally, to improve the integration efficiency of the heat exchange beams 12, a proportion of the total volume of the plurality of heat exchange beams 12 to the total volume of the box assembly 1 is less than or equal to 15%, and a proportion of the total mass of the plurality of heat exchange beams 12 to the total mass of the box assembly 1 is less than or equal to 10%. Preferably, the proportion of the total volume of the plurality of heat exchange beams 12 to the total volume of the box assembly 1 may be 10%, and the proportion of the total mass of the plurality of heat exchange beams 12 to the total mass of the box assembly 1 may be equal to 5%.

According to some embodiments of this application, optionally, to improve the structural strength of the heat exchange beam 12, a gap between the heat exchange beam 12 and the battery cell 211 is less than or equal to 3 mm. This prevents deformation of the heat exchange beam 12 caused by direct contact between the battery cell 211 and the heat exchange beam 12. Preferably, the gap between the heat exchange beam 12 and the battery cell 211 may be less than or equal to 1.5 mm.

It should be noted that the gap between the battery cell 211 and the heat exchange beam 12 may be filled with thermally conductive adhesive. This not only serves to secure the battery cell 211, but also conducts the heat generated by the battery cell 211 to the heat exchange beam 12, thereby improving the heat exchange effects of the box assembly 1.

According to some embodiments of this application, optionally, to ensure the integration efficiency of the box assembly 1, when the heat exchange beam 12 extends in the length direction of the box assembly 1, a proportion of the length of the heat exchange beam 12 to the length of the box assembly 1 is greater than or equal to 0.5 and less than or equal to 1; when the heat exchange beam 12 extends in the width direction of the box assembly 1, a proportion of the length of the heat exchange beam 12 to the width of the box assembly 1 is greater than or equal to 0.5 and less than or equal to 1. Preferably, when the heat exchange beam 12 extends in the length direction of the box assembly 1, the proportion of the length of the heat exchange beam 12 to the length of the box assembly 1 may be 0.5; when the heat exchange beam 12 extends in the width direction of the box assembly 1, the proportion of the length of the heat exchange beam 12 to the width of the box assembly 1 may be 0.5.

According to some embodiments of this application, referring to FIG. 2 and FIG. 3, this application provides a battery 100 including a plurality of battery cells 211 and a box assembly 1. The box assembly 1 includes a frame 11 and a plurality of heat exchange beams 12. The frame 11 includes a bottom plate 111 and side plates 112 arranged around the bottom plate 111, and the bottom plate 111 and the side plates 112 jointly enclose an accommodating cavity 13. The heat exchange beam 12 is disposed in the accommodating cavity 13 to divide the accommodating cavity 13 into a plurality of accommodating sub-cavities 131, and a heat exchange passage is provided in the heat exchange beam 12 for circulating a heat exchange medium. A plurality of heat exchange plates 122 are spaced apart in a Y-axis direction, and any one of the heat exchange plates 122 extends in an X-axis direction. At least two of the plurality of battery cells 211 are arranged in the X-axis direction to form a battery row, one accommodating sub-cavity 131 accommodates at least two battery rows, and the at least two battery rows are stacked in a height direction of the heat exchange beam 12. The heat exchange beam can improve the overall rigidity of the frame 11. In addition, the heat exchange passage is provided in the heat exchange beam 12 for circulating the heat exchange medium, so that the heat exchange beam 12 is integrated with the heat exchange function. This improves the space utilization of the box assembly 1, thereby increasing the energy density of the battery 100. In addition, with the battery cells 211 laid flat, a relatively uniform temperature is achieved inside the battery cells 211, lowering the design requirements for the heat exchange beam 12 in the height direction.

According to some embodiments of this application, this application further provides an electric apparatus including the battery 100 described in any one of the foregoing solutions, where the battery 100 is configured to supply electric energy to the electric apparatus.

The electric apparatus may be any one of the foregoing devices or systems that use the battery 100.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A box assembly, **characterized by** comprising:
a frame, wherein the frame comprises a bottom plate and side plates arranged around the bottom plate, and the bottom plate and the side plates jointly enclose an accommodating cavity; and
at least one heat exchange beam, wherein the heat exchange beam is disposed in the accommodating cavity to divide the accommodating cavity into a plurality of accommodating sub-cavities, and a heat exchange passage is provided in the heat exchange beam for circulating a heat exchange medium.

2. The box assembly according to claim 1, **characterized in that** the heat exchange beam comprises:
a beam body, wherein the beam body has a first side wall and a second side wall opposite each other in a thickness direction of the beam body;
at least one first heat exchange plate, wherein the first heat exchange plate is disposed on the first side wall;
and/or at least one second heat exchange plate, wherein the second heat exchange plate is disposed on the second side wall.

3. The box assembly according to claim 2, **characterized in that** the first side wall is recessed to form at least one first accommodating groove, and any one of the first heat exchange plates is disposed in one of the first accommodating groove(s);
and/or the second side wall is recessed to form at least one second accommodating groove, and any one of the second heat exchange plates is disposed in one of the second accommodating groove(s).

4. The box assembly according to claim 1, **characterized in that** the heat exchange beam comprises a beam body and at least one heat exchange plate, wherein a mounting cavity is provided in the beam body, and the heat exchange plate is disposed in the mounting cavity.

5. The box assembly according to claim 4, **characterized in that** the heat exchange beam further comprises a stiffener, and the stiffener is connected between the heat exchange plate and an inner wall of the mounting cavity.

6. The box assembly according to any one of claims 1 to 5, **characterized in that** a first flow passage is provided in the bottom plate for circulating the heat exchange medium.

7. The box assembly according to any one of claims 1 to 5, **characterized in that** the box assembly further comprises at least one first heat sink plate, and the first heat sink plate is disposed on a surface of the bottom plate facing or back away from the accommodating cavity.

8. The box assembly according to any one of claims 1 to 5, **characterized in that** the box assembly further comprises at least one first heat sink plate, and at least one first accommodating cavity is provided in the bottom plate, wherein the first heat sink plate is disposed in the first accommodating cavity.

9. The box assembly according to any one of claims 1 to 5, **characterized in that** the frame further comprises a cover plate, wherein the cover plate is disposed at ends of the side plates away from the bottom plate to seal the accommodating cavity.

10. The box assembly according to claim 9, **characterized in that** a second flow passage is provided in the cover plate for circulating the heat exchange medium.

11. The box assembly according to claim 9, **characterized in that** the box assembly further comprises at least one second heat sink plate, and the second heat sink plate is disposed on a surface of the cover plate facing or back away from the accommodating cavity.

12. The box assembly according to claim 9, **characterized in that** the box assembly further comprises at least one second heat sink plate, and at least one second accommodating cavity is provided in the cover plate, wherein the second heat sink plate is disposed in the second accommodating cavity.

13. A battery, **characterized by** comprising a battery cell and the box assembly according to any one of claims 1 to 12, wherein the accommodating sub-cavity is configured to accommodate the battery cell.

14. The battery according to claim 13, **characterized in that** the heat exchange beam is configured as a transverse heat exchange beam and/or a longitudinal heat exchange beam, and a size of the battery cell in a height direction of the heat exchange beam is smaller than a size of the battery cell in an extending direction of the heat exchange beam and a size of the battery cell in a thickness direction of the heat exchange beam.

15. The battery according to claim 13, **characterized in that** the battery cell is provided with a pressure relief mechanism, and the pressure relief mechanism faces the heat exchange beam.

16. The battery according to claim 15, **characterized in that** each of the battery cells is arranged adjacent to at least one of the heat exchange beams, and the pressure relief mechanism faces at least one of the adjacent heat exchange beams.

17. The battery according to claim 15 or 16, **characterized in that** the battery cell is further provided with an electrode terminal, and the electrode terminal and the pressure relief mechanism are arranged on two adjacent or opposite surfaces of the battery cell respectively.

18. The battery according to any one of claims 15 to 17, **characterized in that** the battery comprises a battery row formed by arranging a plurality of battery cells in a first direction, and the heat exchange beam extends in the first direction.

19. The battery according to claim 18, **characterized in that** an emission cavity is disposed in the heat exchange beam, wherein the emission cavity is suitable for collecting emissions from the pressure relief mechanism of the battery cell.

20. The battery according to claim 19, **characterized in that** the heat exchange beam is provided with at least one docking part, wherein the emission cavity is suitable for collecting the emissions from the pressure relief mechanism of the battery cell through the docking part.

21. The battery according to claim 20, **characterized in that** the docking part is provided in plurality, and the plurality of docking parts are spaced apart in the first direction, wherein any one of the docking parts is configured to be provided in correspondence with the pressure relief mechanism of at least one of the battery cells.

22. The battery according to any one of claims 18 to 21, **characterized in that** the battery row is provided in plurality, and at least two of the plurality of battery rows are stacked in a height direction of the heat exchange beam.

23. The battery according to claim 22, **characterized in that** a plurality of docking parts are spaced apart in the height direction of the heat exchange beam, wherein any one of the docking parts is configured to be provided in correspondence with the pressure relief mechanism of at least one of the battery cells.

24. The battery according to any one of claims 18 to 23, **characterized in that** the battery row is provided in plurality, and at least two of the plurality of battery rows are arranged side by side in a second direction, wherein the second direction is perpendicular to the first direction, and in the second direction, the heat exchange beam is disposed between at least some of pairs of adjacent battery rows.

25. The battery according to claim 18, **characterized in that** the battery cell is a cylindrical battery cell, and an axial direction of the battery cell is parallel to a height direction of the heat exchange beam; and
the first side wall is recessed to form a plurality of first positioning grooves, and the second side wall is recessed to form a plurality of second positioning grooves, wherein any one of the first positioning grooves abuts against an outer peripheral surface of one of the battery cells, and any one of the second positioning grooves abuts against the outer peripheral surface of one of the battery cells.

26. An electric apparatus, **characterized by** comprising the battery according to any one of claims 13 to 25, wherein the battery is configured to supply electric energy.
